(19) Europäisches Patentamt / European Patent Office / Office européen des brevets

(11) **EP 2 703 109 A1**

(12) **EUROPEAN PATENT APPLICATION**

(43) Date of publication:
**05.03.2014 Bulletin 2014/10**

(21) Application number: **12006238.5**

(22) Date of filing: **04.09.2012**

(51) Int Cl.:
*B23K 9/16* (2006.01)   *B23K 26/14* (2014.01)
*B23K 26/20* (2014.01)   *B23K 26/12* (2014.01)
*B23K 35/38* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Linde Aktiengesellschaft**
**80331 München (DE)**

(72) Inventor: **Fieret, Jim, Dr.**
**Shenington, OX15 6NE (GB)**

(54) **Methods of and device for providing a heated or cooled protective gas for welding, especially laser welding**

(57)   The present invention relates to a method of providing a protective gas for welding, especially laser welding, wherein a gas or gas mixture having a higher specific density than that of ambient air is heated to a temperature, at which it has a lower specific density than that of ambient air.

Fig. 1

**Description**

The present invention relates to a method for providing a protective gas for laser welding as well as a corresponding device.

Background of invention

During welding, especially laser welding, objects to be welded are subjected to high temperatures and atmospheric oxygen, which leads to intense oxidation. Oxides formed in this way generally appear as temper colour, for example, with stainless steel or titanium materials. Temper colours will grately impair the corrosion resistance of such metals. Furthermore, severe oxidation will impair the formation of weld roots. Thus, in many cases, the root side of a weld has to be protected against oxygen in order to ensure optimum corrosion resistance. The careful exclusion of atmospheric oxygen during welding, especially laser welding, can prevent oxidation and temper colours.

Thus, a protective or "root backing" gas is often used to protect the underside ("root") of a weld, especially a laser weld, against oxidation. Usually, inert gases, or mixtures of inert gases are used as such protective gases. An example is VARIGON 50/50, which consists of 50% Helium and 50% Argon.

In numerous laser welding applications, the laser beam impinges vertically down (i.e. parallel to the direction of force the of gravity) on to the top surface of a component to be welded. Therefore, a protective, root backing gas has to be blown upwards (i.e. against the direction of the force of gravity) against the bottom side or underside of this component.

In order to achieve this, usually root backing gases, which are lighter than air, are used, so that they rise naturally, i.e. without the necessity of any blowing action, due to their lower specific density as compared to ambient air. For example, while the specific density of air at 0°C is approximately 1.3 kg/m$^3$, the specific density of VARIGON 50/50 is 0.98 kg/m$^3$.

However, it is considered a disadvantage that VARIGON 50/50 contains a substantial amount of Helium, which is in short supply and relatively expensive to provide. On the other hand, pure Argon is substantially heavier than air, and has a specific density of 1.78 kg/m$^3$. Thus, if pure Argon was previously used, it would sink away from the weld root, even if it were blown towards the weld root with a suitable nozzle.

On the other hand, there are applications where it is desired that a protective gas, which has a lower density than ambient air at a certain temperature, sinks (i.e. moves in a downward direction) relatively to the ambient air.

The object of the invention is thus to provide a protective gas for welding, especially laser welding, with which the described disadvantages can be avoided.

Disclosure of invention

This object is achieved with methods comprising the features of claims 1 or 4 and with a device comprising the features of claim 6.

According to the invention, it is possible to utilize gases with a density usually (i.e. for example at 0°C or room temperature) higher than that of ambient air, for example pure (industrial grade) Argon, in such a way that it rises in ambient air, and can thus be used as a protective or root backing gas for example for laser beams, which impinge vertically down on an upper surface of a component to be welded.

According to the invention, it is also possible to utilize gases with a density usually lower than that of ambient air in such a way that it sinks in an ambient air, and can thus be used as a protective gas or root backing gas for example for laser beams, which impinge vertically upwards onto a lower surface of a component to be welded.

Advantageous embodiments of the invention are the subject-matter of the dependent claims.

According to a preferred embodiment, protective gas, which is heated to a temperature, at which its specific density is lower than that of ambient air, is discharged from a device arranged below components to be welded, such that protective gas exiting the device will rise towards areas of the components to be welded, which require protection. This enables a simple constructioned arrangement for root backing applications, in which for example a laser beam is directed onto the upper surface of components to be welded together, and a root backing for the lower surface or fthe components is required.

Advantageously, laser welding is performed by a laser welding device arranged above components to be welded, such that laser light is directed vertically downwards onto the components.

Brief description of drawings

The invention will now be described with reference to the accompanying drawing. Herein,

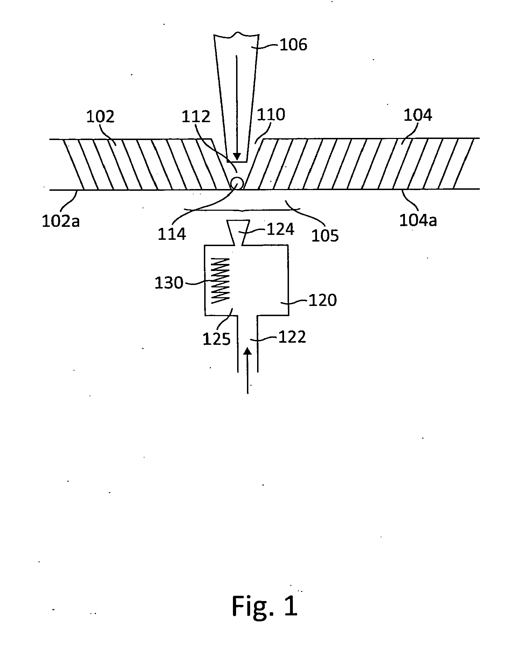

Figure 1    shows an arrangement of a first preferred embodiment of a device according to the invention, in a schematically simplified representation.

Detailed description of drawings

In the embodiment shown in figure 1, two metal components 102, 104 are to be laser welded together by means of a laser welding device 106. The laser welding device 106 is orientated so that laser light impinges vertically down into a groove 110 formed by two slanting edges of components 102, 104. The lower area of this groove 110 is commonly referred to as the root 112 of a weld formed by laser welding device 106. Be it noted that laser welding device 106 will usually be provided with means (not shown) for providing a welding gas in groove 110.

A weld seam generated by laser welding device 106 is designated 114.

During the laser welding application, in which laser welding device 106 radiates laser light onto the components 102, 104 vertically from above, also an area 105 (indicated by means of a bracket) on the bottom surfaces of components 102, 104, designated 102a, 104a, is significantly heated. In order to avoid oxidation in connection with such heating, a root backing gas is discharged from a root backing gas discharge device 120, arranged under components 102, 104.

This discharge device 120 is provided with an inlet channel 122, through which protective or root backing gas can enter a heating and/or cooling chamber 125, comprising heating and/or cooling means 130, of the device, and an exit port, for example a nozzle 124, through which root backing gas can be discharged from chamber 125 in order to impinge on area 105 of lower surfaces 102a, 104a of components 102, 104.

In the embodiment shown in Fig. 1, discharge device 120 is provided with heating means 130, by means of which a root backing gas entering the device through channel 122 can be heated to a temperature, at which its specific density is lower than that of ambient air, so that heated root backing gas can discharged through port 124.

Thus, a root backing gas, which, at ambient temperature has a greater densitiy than ambient air, can be transformed into a state, in which it has a smaller desity than ambient air.

Thus, even root backing gases, which, under ambient temperature conditions have a larger density than air, for example pure Argon, can be discharged from nozzle 124 upwardly towards area 105, without the necessity of providing any blowing devices.

For example, to create Argon with a density equal to that of VARIGON 50/50 (e.g. at 0°C), it will have to be heated to a certain temperature, which can be calculated by the following equation:

$$\text{(Density of Argon)} * \text{(absolute temperature at 0°C)} / \text{(Density of VARIGON 50/50)} = (1.78 * 273) / 0.98 = 496°K = 233°C.$$

To achieve this, only a small amount of power is required, which can be calculated as follows:

$$\text{Power} = \text{(temperature rise)} * \text{(specific heat at constant pressure)} * \text{flow rate} = (223°C) * (0.532 \text{ J/g/C}) * (0.33 \text{ g/s}) = \text{approx. 40 Watt.}$$

The effective density of the root backing gas produced in such a way can be controlled by varying the heating power and/or by varying or reducing to zero e.g. the Helium content.

By providing such a heated root backing gas, the amounts of Helium required in connection with laser welding or any other forms of heat welding can be reduced significantly.

Be it noted that the gas discharge device 120 can also be provided with a cooling means, by means of which a gas, which at ambient temperature has a density lower than that of ambient air, can be cooled down to a temperature at which it has a greater density than ambient air. Such a device can, for example, be used to discharge such a gas in a downward direction, in case device 120 is, for example, placed above components 102, 104, with nozzle 124 facing downwards.

**Claims**

**1.**    Method of providing a protective gas for welding, especially laser welding, wherein a gas or gas mixture having a higher specific density than that of ambient air is heated to a temperature, at which it has a lower specific density than that of ambient air.

2. Method according to claim 1, wherein protective gas, which is heated to a temperature, of which its specific density is lower than that of ambient air, is discharged from a device (120) arranged below components (102, 103) to be welded, such that protective gas exiting the device (120) will rise towards an area (105) of the components to be welded, which requires protection.

3. Method according to any one of the preceding claims, wherein laser welding is performed by a laser welding device (106) arranged above components (102, 104) to be welded, such that laser light is directed vertically downwards onto the components (102, 104).

4. Method for providing a protective gas for welding, especially laser welding, wherein a gas or gas mixture having a lower specific density than that of ambient air is cooled down to a temperature, at which the specific density is higher than that of ambient air.

5. Method according to any one of the preceding claims, wherein the protective gas is used as a root backing gas.

6. Device for providing a protective gas for welding, especially laser welding, comprising an entrance port (122), through which protective gas can enter a heating and/or cooling chamber (125), heating and/or cooling means (130) for heating or cooling the chamber (125), and an exit port, especially a nozzle (124), through which heated or cooled protective gas can be discharged onto an area (105) of components to be welded, which require protection.

Fig. 1

Europäisches
Patentamt

European
Patent Office

Office européen
des brevets

# EUROPEAN SEARCH REPORT

Application Number

EP 12 00 6238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 707 305 A1 (WESTFALEN AG) 4 October 2006 (2006-10-04) | 1-5 | INV. B23K9/16 |
| A | * paragraphs [0005], [0006], [0009], [0010]; claims 1-2 * | 6 | B23K26/14 B23K26/20 |
| X | JP 58 163575 A (NISSHIN STEEL CO LTD) 28 September 1983 (1983-09-28) * abstract; figures * | 1,2,6 | B23K26/12 B23K35/38 |
| X | US 2011/108535 A1 (N. KAWAGUCHI ET AL) 12 May 2011 (2011-05-12) | 6 | |
| A | * paragraphs [0038], [0042], [0048]; figures * | 1,4 | |
| X | JP 3 060015 A (SANYO ELECTRIC CO LTD) 15 March 1991 (1991-03-15) | 6 | |
| A | * abstract; figures * | 1,4 | |
| A | US 4 000 392 A (C. M. BANAS ET AL) 28 December 1976 (1976-12-28) * abstract; figures * | 1,4,6 | |
| A | DE 199 62 045 A1 (MESSER GRIESHEIM GMBH) 12 July 2001 (2001-07-12) * column 1, lines 19-26 * | 6 | TECHNICAL FIELDS SEARCHED (IPC) B23K |

The present search report has been drawn up for all claims

| Place of search | Date of completion of the search | Examiner |
|---|---|---|
| Munich | 14 February 2013 | Jeggy, Thierry |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 12 00 6238

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2013

| Patent document cited in search report | | Publication date | Patent family member(s) | | Publication date |
|---|---|---|---|---|---|
| EP 1707305 | A1 | 04-10-2006 | DE 102005014833 A1<br>EP 1707305 A1 | | 05-10-2006<br>04-10-2006 |
| JP 58163575 | A | 28-09-1983 | NONE | | |
| US 2011108535 | A1 | 12-05-2011 | CN 102077322 A<br>EP 2299478 A1<br>JP 2010010526 A<br>KR 20110022597 A<br>TW 201008691 A<br>US 2011108535 A1<br>WO 2010001727 A1 | | 25-05-2011<br>23-03-2011<br>14-01-2010<br>07-03-2011<br>01-03-2010<br>12-05-2011<br>07-01-2010 |
| JP 3060015 | A | 15-03-1991 | NONE | | |
| US 4000392 | A | 28-12-1976 | NONE | | |
| DE 19962045 | A1 | 12-07-2001 | NONE | | |

EPO FORM P0459

For more details about this annex : see Official Journal of the European Patent Office, No. 12/82